# EUROPEAN PATENT SPECIFICATION

(11) **EP 3 907 112 B1**
(45) Date of publication and mention of the grant of the patent: **17.04.2024**
(21) Application number: 21172874.6
(22) Date of filing: 07.05.2021
(51) Int. Cl.: B60R 25/01

(54) **SAFETY BOX FOR OBD CONNECTORS**
SICHERHEITSKASSETTE FÜR OBD-STECKER
BOÎTE DE SÉCURITÉ POUR CONNECTEURS OBD

(30) Priority: 07.05.2020 IT 202000010270
(43) Date of publication of application: 10.11.2021
(73) Proprietor: ST Automotive Srl, 70132 Bari (BA) (IT)
(72) Inventor: Marchitelli, Mauro, 70043 Monopoli (BA) (IT)
(74) Representative: Fezzardi, Antonio

(56) References cited:
- GB-A- 2 383 785
- GB-A- 2 503 790
- US-A- 3 527 176
- US-A- 4 488 764
- US-A- 5 791 176
- US-A1- 2006 033 635
- US-A1- 2008 173 494
- US-A1- 2008 214 022

## Description

The present invention relates to the automotive field, and in particular it pertains to the field of anti-burglary devices and means for deterring theft attempts.

More specifically, the invention relates to a device which is installable in vehicles for the protection of the OBD connector, in order to prevent unauthorized access to said connector, for example in cases of theft attempts made by accessing the control unit of the car through the OBD connector.

US20008173494 describes a device preventing unauthorized access to a control unit of a car.

It is the main object of the present invention to solve the problems of the known art by providing a device which is easily installable, provides an effective protection of the OBD connector, and is a valid deterrent in case of an attempted theft.

This has been achieved, according to the invention, by providing a safety box adapted to house the OBD connector and which is openable with a cover which allows authorized access to the connector itself, where said safety box is characterized by a peculiar system for closing and removably fixing the cover to the armored body of the box itself.

A better understanding of the invention will be achieved by means of the following detailed description of a preferred embodiment of the invention, given by way of non-limiting example, and with reference to the accompanying drawings, in which:

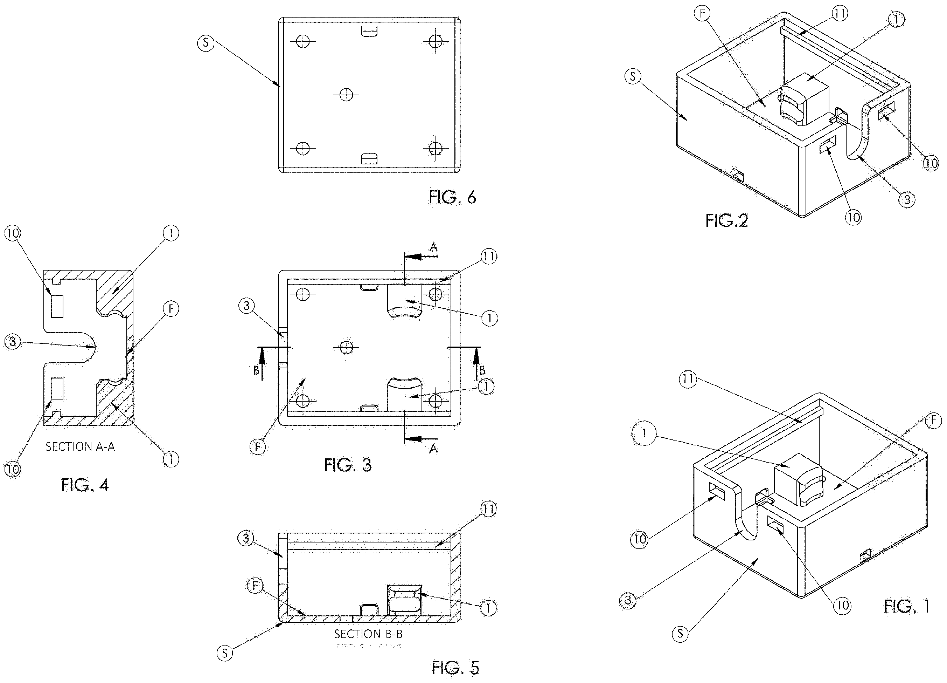

figures 1 and 2 are 3D views of the box without cover;
figure 3 is a top plan view of the box in figures 1 and 2;
figures 4 and 5 are sectional views, according to the planes of lines A-A and B-B indicated in figure 3, respectively;
figure 6 is a bottom plan view of the box in figures 1 and 2;

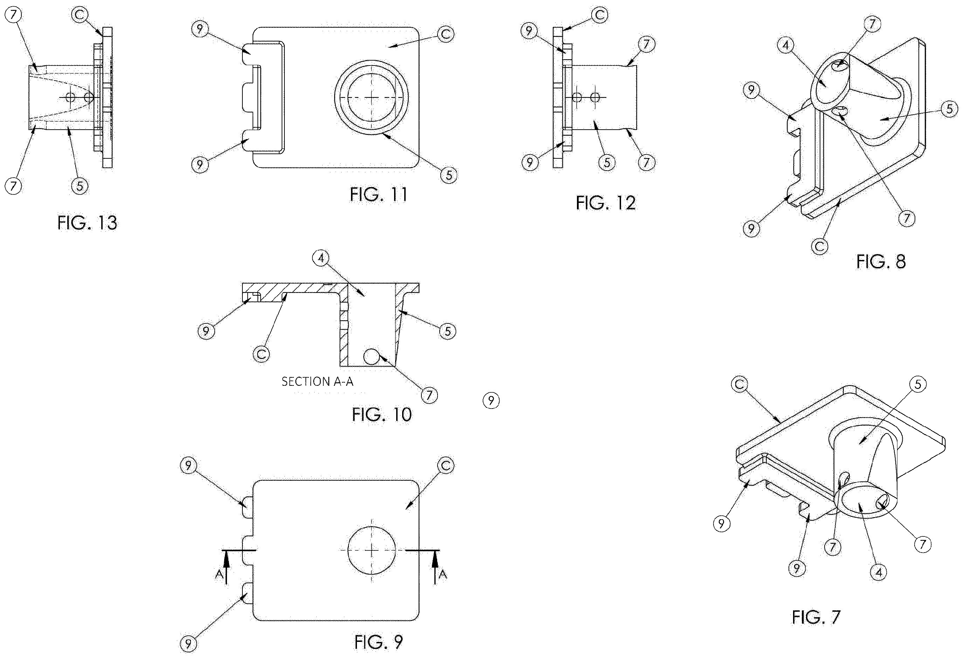

figures 7 and 8 are 3D views of the cover of the box in figures 1 and 2;
figure 9 is a top plan view of the cover in figures 7 and 8;
figure 10 is a sectional view, according to the planes of line A-A indicated in figure 9;
figure 11 is a bottom plan view of the cover in figures 7 and 8;
figures 12 and 13 are side views from the left and right of the cover in figure 11;

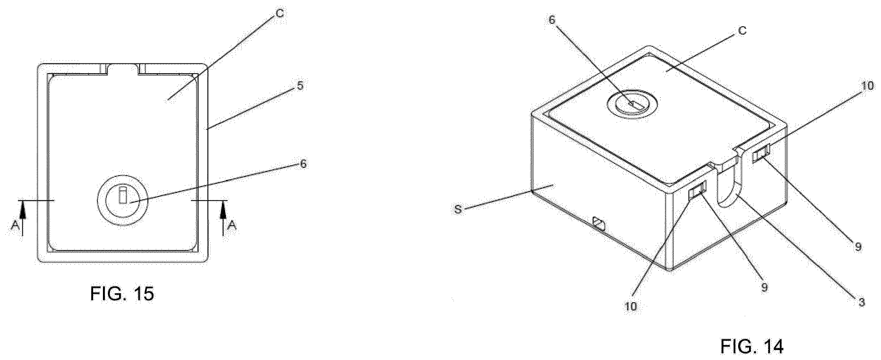

figure 14 is a 3D view of the cover of the box in figures 1 and 2 closed with the cover in figures 7 and 8;
figure 15 is a top plan view of the box with cover in figure 14;
figure 16 is a sectional view, according to the plane of line A-A indicated in figure 15, which shows the invention in the closed configuration, where for visual clarity only one ball is shown;
figure 17 shows an enlarged detail indicated in figure 16;
figure 18 is a sectional view, according to the plane of line A-A indicated in figure 15, which shows the invention in the open configuration, where for visual clarity only one ball is shown;
figure 19 shows an enlarged detail indicated in figure 18;

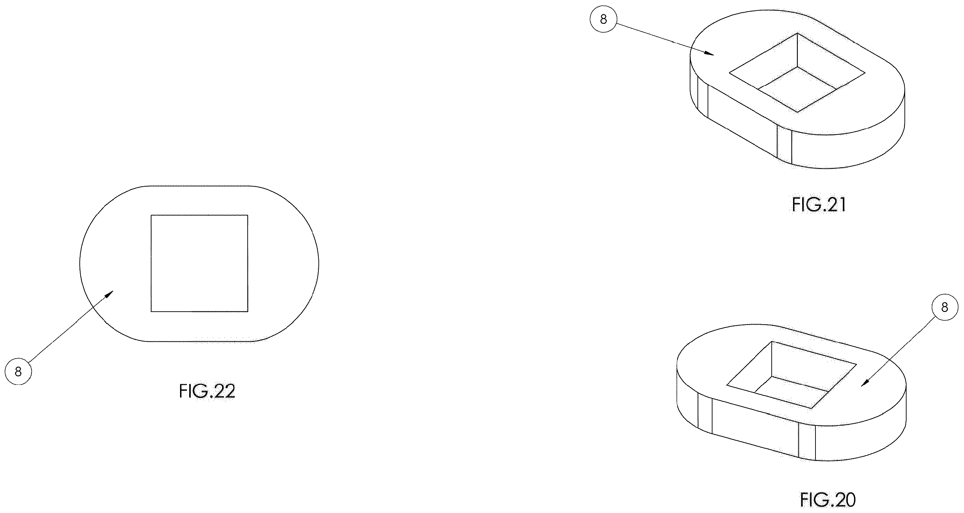

figures 20 and 21 are 3D views of the cam which is operable by the lock for opening/closing the cover;
figure 22 is a top plan view of the cover cam in figures 20 and 21.

In the preferred embodiment described, the invention consists of a box S with an openable cover C having a hollow box-like body preferably in the shape of a parallelepiped, where - on the inner surface of the face of bottom F opposite to the cover C - the housing for the OBD connector is obtained and there is at least one element 1 adapted to form a tooth and channel interlocking, configured to cooperate with corresponding balls 2 for locking the cover C to close the hollow body of the box S in which the OBD connector is held.

One side of the box adjacent to the OBD connector has an opening 3 to allow the cables of the OBD connector to pass.

At the interlocking element 1 placed at the bottom F of the box S, the cover C has a tubular cylinder 5 protruding towards the interior, which is made in one piece or integral with the cover itself and is accessible from the outside through a special hole 4 present on the cover C and in which a block of a lock 6 of known type is insertable, which is rotatable coaxially to the cylinder 5 which accommodates it.

According to a peculiar feature of the present invention, said cylinder 5 of the cover C is of a length such as to almost reach the bottom F of the box S, and close to the free end of said cylinder 5, one or more radial through holes 7 are arranged, evenly distributed along the circumference of the cylinder itself, which holes 7 are adapted to accommodate respective radially movable balls 2, adapted to create a fixing coupling with the interlocking tooth and channel elements 1 correspondingly positioned to said holes 7 for the balls 2.

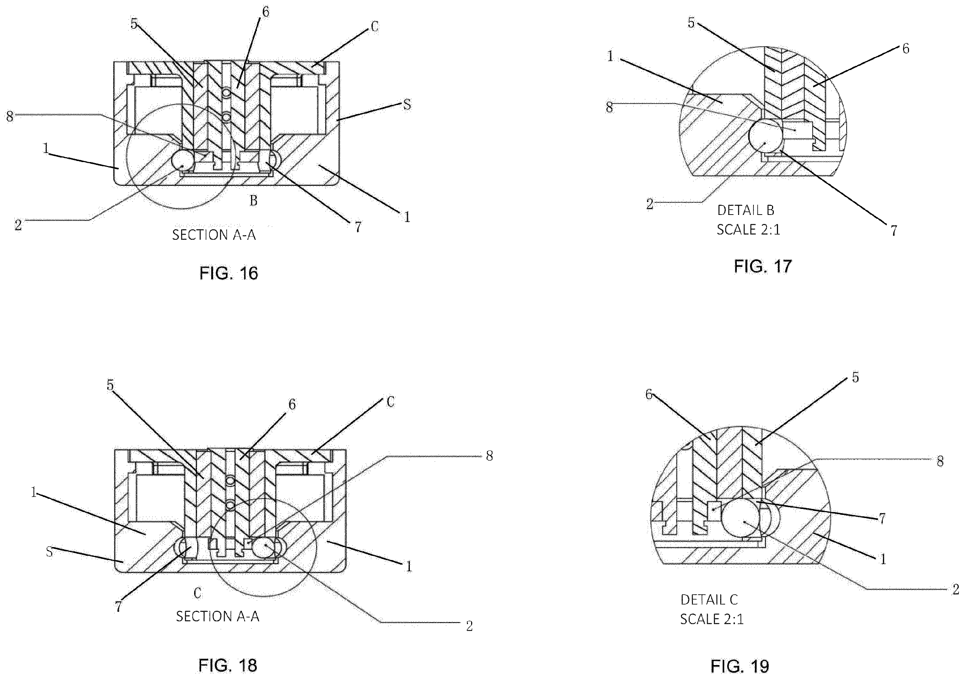

As stated above, once the box S has been closed with the cover C, it is possible to operate the lock 6 to move only partially the balls 2 away from the outer surface of the cylinder 5 until they mechanically interfere with said interlocking element 1 present at the bottom F of the box S, thus firmly constraining the cover C to the body of the box S (Figures 16-17).

In the example shown, by closing the box S, the free end of the cylinder 5 of the cover C is inserted between the two interlocking ball-locking elements 1 in the shape of a circular crown arc positioned at the bottom F of the box S, and by turning the key of the lock 6 fixed in the cylinder 5, the rotation of a cam 8 installed below and integrally with the lock 6 is caused, which cam 8 moves the balls 2 present in the respective radial holes 7 of the cylinder 5 radially outwards, so that such balls come into contact with the respective interlocking tooth and channel elements 1 which are provided outside the cylinder 5 at the bottom F of the box S.

A second peculiar feature of the invention is that said balls 2, when in the closed position, are positioned straddling between the cylinder 5 and the interlocking elements 1 at the bottom F, so that the mechanical forces caused by any attempts to open the cover C are discharged directly onto the balls 2 placed in direct and simultaneous contact with the cylinder 5 and the interlocking elements 1 at the bottom F.

In the figures, a non-limiting constructional example is shown, which includes: two diametrically opposite holes 7 close to the free end of the cylinder 5 in which the lock 6 is installed, two balls 2 housed in said holes 7, and two ball-locking elements 1 at the same holes 7, adapted to form a tooth and channel interlocking, where such ball-locking elements 1 are welded, or made in one piece, or in any case made integral with the bottom F of the hollow body of the armored box S. Said ball-locking elements 1 are both in the form of a circular crown arc which is concentric with the cylinder 5 and are arranged at each hole 7 in which the balls 2 are housed, and are arranged at a mutual distance equal to at least the outer diameter of the cylinder 5 of the cover C.

Each tooth and channel interlocking element 1 is preferably parallel to the surface of the bottom F.

As already mentioned, each ball 2 is housed and channeled into the respective hole 7 and is radially slidable therein without ever completely exiting therefrom, both in one direction and in the other, according to the rotation direction of the cam 8 operated by the lock 6.

In a preferred embodiment, the cam 8 is flat and positioned between the balls 2 so as to cause the movement thereof upon the rotation of the cam itself. Merely by way of example: in the case of two balls opposite to each other (at 180°), the cam 8 could be oval; in the case of three balls at 120° to one another, the cam 8 could be three-lobed; etc.

A third peculiar feature of the invention is that the cam 8 and the balls 2 are constrained together by a force of magnetic attraction, which always keeps the balls 2 in constant contact with the cam 8, so that when the cam 8 is rotated in the opposite direction to that needed to move the balls 2 and close the armored box S, such balls 2 are attracted by the cam 8 to return to the resting positions thereof inside the cylinder 5, in a position such as to disengage the interlocking elements 1 at the bottom F of the box S, which can thus be opened.

In the example shown, the cam 8 is a magnet and the balls 2 are made of ferromagnetic material to be attracted thereto. Alternatively, the balls 2 could be magnets and the cam 8 made of ferromagnetic material.

The closure system described up to now is configured so that when the lock 6 is voluntarily placed in the open configuration of the box S, the cam 8 is in a position such as to recall the balls 2 thereto due to a magnetic effect (Figure 18), thus causing them to be translated radially along the holes 7 towards the cylinder 5 to be disengaged from the interlocking elements 1 outside it, so that the box can be opened by lifting the cover C while allowing the two balls 2 to remain in any case channeled/housed in the respective holes 7 of the cylinder 5.

Vice versa, when the lock 6 is in the closed configuration, the rotation of the cam 8 pushes the balls 2 along respective radial holes 7 of the cylinder 5 until they partially exit therefrom and enter the recess of the interlocking tooth and channel element 1, thus blocking the cylinder 5 (and therefore the cover C) to the body of the box S, which is thus firmly closed.

Advantageously, this system is burglar-proof since - even by tampering with the closed lock - the balls 2 remain in the closed position i.e. partly in the channel of the interlocking element 1 and partly in the thickness of the cylinder 5, thus preventing the cover C from being removed.

According to a preferred embodiment of the invention, the body of the box S, the cover C with the cylinder 5, and the interlocking element 1 at the bottom F are made of a non-magnetic steel alloy and advantageously subjected to hardening with an HRC hardness degree between 55 and 60.

It is preferable that the cylinder 5 carrying the lock 6 is off-center with respect to the cover C, and that the farthest side of the cover C from the lock 6 is provided with one or more hooking teeth 9 adapted to cooperate with respective holes 10 arranged in the corresponding side of the hollow box-like body S, in order to facilitate the positioning of the cover C and the opening/closing movements thereof.

Along two sides of the box S adjacent to the side with said lateral coupling holes 10 of the cover C, peripheral abutment beads 11 of the cover C are preferably provided, placed close to the edge of the open part of the box S.

It is apparent that those skilled in the art can make several changes, adaptations, integrations, and variations to the embodiment described heretofore by way of non-limiting example and can replace elements with others which are technically or functionally equivalent, without departing from the scope of protection of the following claims.

For example, it is possible to include a magnet to reduce or eliminate the possible vibrations between the cover C and the box S, when the vehicle engine is running.

## Claims

1. A burglar-proof container device which is installable and fixable inside vehicles for the protection of the OBD (on-board diagnostics) connector, of the type comprising a hollow box-like body (S) with a removable closing cover (C), **characterized in that** said cover (C) is provided with a tubular cylinder (5) containing a lock (6) for operating a cam (8) and ball (2) closure system, configured to cooperate with interlocking tooth and ball-locking channel elements (1) arranged at the bottom (F) of said hollow body (S); wherein inside said hollow body (S) there is also a housing for an OBD connector, as well as an opening (3) for the cables of the same connector to pass towards the exterior; wherein said cam (8) is operatively connected to each ball (2) associated thereto, by means of forces of magnetic attraction, while the remaining parts of the device are made of diamagnetic material.

2. A device according to the preceding claim, **characterized in that** said hollow body consists of a box (S) with an openable cover (C), wherein the housing for the OBD connector is placed on the inner surface of the face of bottom (F) opposite to the cover (C); wherein said interlocking tooth and channel elements (1) are configured to cooperate with corresponding balls (2) for locking the cover (C) in the closed configuration of the hollow body of the box (S) in which the OBD connector is held.

3. A device according to at least one of the preceding claims, **characterized in that** said tubular cylinder (5) of the cover (C) is positioned at the interlocking elements (1) placed at the bottom (F) of the box (S) and protrudes towards the interior of the hollow body; wherein said tubular cylinder (5) is in one piece or integral with the cover (C) and is accessible from the outside through a special hole (4) present on the cover (C) and in which the block of a lock (6) of known type is insertable, which is rotatable coaxially to the tubular cylinder (5) which accommodates it.

4. A device according to at least one of the preceding claims, **characterized in that** said tubular cylinder (5) is of a length such as to almost reach the bottom (F) of the box (S), and close to the free end of said cylinder (5), one or more radial holes (7) are provided evenly distributed along the circumference of the cylinder itself, which holes (7) are adapted to accommodate respective balls (2) radially movable therealong, adapted to achieve a fixing coupling with at least one interlocking tooth and channel element (1) which is positioned, correspondingly to said holes (7) for the balls (2), at the bottom (F) of the box (S).

5. A device according to the preceding claim, **characterized in that**, once the cover (C) has been closed, the lock (6) is operable to partially move the balls (2) away from the tubular cylinder (5) up to mechanically interfere with said interlocking elements (1) present at the bottom (F) of the hollow body, thus firmly constraining the cover (C) to the hollow body (S) of the device.

6. A device according to claim 4 or 5, **characterized in that** the tubular cylinder (5) of the cover (C) is configured to be insertable between the interlocking tooth and ball-locking channel elements (1), which are in the shape of a circular crown arc positioned at the bottom (F) of the hollow box-like body (S); wherein a cam (8) is provided, installed below and integrally with the lock (6), which cam (8) is operable by turning the key of the lock (6) to move the balls (2) present in the respective radial holes (7) of the tubular cylinder (5) radially outwards, so that such balls (2) come into contact with the interlocking tooth and channel elements (1) present outside said cylinder (5).

7. A device according to at least one of the preceding claims, **characterized in that** said balls (2), when in the closed position, are positioned straddling between the tubular cylinder (5) and the interlocking tooth and channel elements (1), so that the mechanical forces caused by any attempts to open the cover (C) are discharged directly onto the balls (2) placed in direct and simultaneous contact with the cylinder (5) and the interlocking elements (1) at the bottom (F).

8. A device according to at least one of the preceding claims, **characterized in that** it includes two diametrically opposite holes (7) close to the free end of the tubular cylinder (5) in which the lock (6) is installed, two balls (2) accommodated in said holes (7) and two ball-locking elements (1) provided at the same holes (7), adapted to form a tooth and channel interlock, wherein such ball-locking elements (1) are welded or in any case made integral with the bottom (F) of the hollow box-like body (S) of the device; wherein said ball-locking elements (1) are both in the shape of a circular crown arc which is concentric to the cylinder (5) and arranged at each hole (7) of the balls (2), at a distance equal to at least the outer diameter of the tubular cylinder (5) integral with the cover (C).

9. A device according to at least one of the preceding claims, **characterized in that** each interlocking tooth and channel element (1) is parallel to the surface of the bottom (F).

10. A device according to claim 4, **characterized in that** each ball (2) is channeled into the respective hole (7) and is slidable therein without ever completely exiting therefrom, both in one direction and in the other, according to the rotation direction of the cam (8) operated by the lock (6).

11. A device according to at least one of the preceding claims, **characterized in that** the lock (6) is configured to rotate a flat cam (8) positioned to operate one or more balls (2) so as to cause their movement upon the rotation of the cam (8) itself.

12. A device according to at least one of the preceding claims, **characterized in that** in the case of two balls (2) opposite to each other at 180°, the cam (8) is oval; in the case of three balls (2) at 120° to one another, the cam (8) is three-lobed; etc.

13. A device according to at least one of the preceding claims, **characterized in that** the cam (8) and the balls (2) are constrained together by a force of magnetic attraction, which always keeps the balls (2) in constant mechanical contact with the cam (8), so that when the cam (8) is rotated in the opposite direction to that needed to move the balls (2) away and close the burglar-proof device, such balls (2) are attracted by the cam (8) and return to their resting positions towards the interior of the cylinder (5) and in a position such as to disengage the interlocking elements (1) present at the bottom (F) of the device, which can thus be opened by lifting the cover (C) thereof.

14. A device according to at least one of the preceding claims, **characterized in that** the cam (8) is a magnet and the balls (2) are made of ferromagnetic material to be attracted thereto, or the balls (2) are magnets and the cam (8) is made of ferromagnetic material.

15. A device according to at least one of the preceding claims, **characterized in that** the hollow box-like body (S) of the device, the cover (C) with the tubular cylinder (5) and the interlocking tooth and channel elements (1) at the bottom (F) are made of a non-magnetic steel alloy.

16. A device according to the preceding claim, **characterized in that** the hollow box-like body (S) of the device, the cover (C) with the tubular cylinder (5) and the interlocking tooth and channel elements (1) at the bottom (F) have a surface hardness with an HRC hardness degree between 55 and 60.

17. A device according to at least one of the preceding claims, **characterized in that** the tubular cylinder (5) containing the lock (6) is decentralized with respect to the cover (C), and **in that** the farthest side of the cover (C) from the lock (6) is provided with hooking teeth (9) adapted to cooperate with respective holes (10) arranged in the corresponding side of the hollow box-like body (S), in order to facilitate the positioning of the cover (C) and the opening/closing movements thereof.

## Patentansprüche

1. Einbruchsichere Behältervorrichtung, die in Fahrzeugen installierbar und anbringbar ist, um den OBD-Steckverbinder (On-Board-Diagnose) zu schützen, wobei die Behältervorrichtung einen boxenartigen hohlen Körper (S) mit einem abnehmbaren Verschlussdeckel (C) umfasst, **dadurch gekennzeichnet, dass** der Verschlussdeckel (C) mit einem röhrenförmigen Zylinder (5) versehen ist, der ein Schloss (6) zur Betätigung eines Mitnehmer-(8) und Kugel- (2) Verschlusssystems enthält, das so konfiguriert ist, dass es mit ineinander greifenden Zahn- und Kugelverriegelungskanalelementen (1) zusammenwirkt, die am Boden (F) des hohlen Körpers (S) angeordnet sind; wobei im Inneren des hohlen Körpers (S) auch ein Gehäuse für einen OBD-Steckverbinder sowie eine Öffnung (3) für den Durchgang der Kabel desselben Steckverbinders nach außen vorhanden ist; wobei der Mitnehmer (8) mit jeder ihm zugeordneten Kugel (2) mittels magnetischer Anziehungskräfte in Wirkverbindung steht, während die übrigen Teile der Vorrichtung aus diamagnetischem Material hergestellt sind.

2. Vorrichtung nach dem vorhergehenden Anspruch, **dadurch gekennzeichnet, dass** der hohle Körper aus einer Box (S) mit einem zu öffnenden Verschlussdeckel (C) besteht, wobei das Gehäuse für den OBD-Steckverbinder auf der Innenfläche der Seite des Bodens (F), die dem Verschlussdeckel (C) gegenüberliegt, angeordnet ist; wobei die ineinander greifenden Zahn- und Kanalelemente (1) so konfiguriert sind, dass sie mit entsprechenden Kugeln (2) zum Verriegeln des Verschlussdeckels (C) in der geschlossenen Konfiguration des hohlen Körpers der Box (S) zusammenwirken, in welchem der OBD-Steckverbinder gehalten wird.

3. Vorrichtung nach mindestens einem der vorhergehenden Ansprüche, **dadurch gekennzeichnet, dass** der röhrenförmige Zylinder (5) des Verschlussdeckels (C) an den am Boden (F) der Box (S) angeordneten Verriegelungselementen (1) positioniert ist und in das Innere des hohlen Körpers ragt; wobei der föhrenförmige Zylinder (5) einstückig oder mit der Verschlussabdeckung (C) integral ausgebildet ist und von außen durch ein spezifisches Loch (4) zugänglich ist, das in der Verschlussabdeckung (C) vorhanden ist und in das das Gehäuse eines gewöhnlichen Schlosses (6) einführbar ist, der koaxial zu dem röhrenförmigen Zylinder (5) drehbar ist, welcher ihn aufnimmt.

4. Vorrichtung nach mindestens einem der vorhergehenden Ansprüche, **dadurch gekennzeichnet, dass** der röhrenförmige Zylinder (5) eine solche Länge aufweist, dass er fast den Boden (F) der Box (S) erreicht, und dass in der Nähe des freien Endes des Zylinders (5) ein oder mehrere radiale Löcher (7) vorgesehen sind, die gleichmäßig entlang des Umfangs des Zylinders selbst verteilt sind, wobei die radialen Löcher (7) dazu ausgestaltet sind, entsprechende Kugeln (2) aufzunehmen, die radial daran entlang beweglich sind und geeignet sind, eine Befestigungsverbindung mit mindestens einem ineinandergreifenden Zahn- und Kugelverriegelungskanalelement (1) auszubilden, das entsprechend den Löchern (7) für die Kugeln (2) am Boden (F) des Kastens (S) angeordnet ist.

5. Vorrichtung nach dem vorhergehenden Anspruch, **dadurch gekennzeichnet, dass** nach dem Schließen des Verschlussdeckels (C) das Schloss (6) betätigt werden kann, um die Kugeln (2) teilweise vom röhrenförmigen Zylinder (5) wegzubewegen, bis sie mechanisch mit den am Boden (F) des Hohlkörpers vorhandenen Verriegelungselementen (1) in Eingriff kommen, wodurch der Verschlussdeckel (C) fest an den hohlen Körper (S) der Vorrichtung gepresst wird.

6. Vorrichtung nach Anspruch 4 oder 5, **dadurch gekennzeichnet, dass** der röhrenförmige Zylinder (5) des Verschlussdeckels (C) so konfiguriert ist, dass er zwischen ineinandergreifenden Zahn- und Kugelverriegelungskanalelementen (1) zum Verriegeln von Kugeln eingesetzt werden kann, die die Form eines kreisförmigen Kronenbogens haben, der am Boden (F) des boxenartigen hohlen Körpers (S) angeordnet ist; wobei ein Mitnehmer (8) vorgesehen ist, der unterhalb und integral mit dem Schloss (6) installiert ist, wobei der Mitnehmer (8) durch Drehen des Schlüssels im Schloss (6) betätigbar ist, um die Kugeln (2), die in den jeweiligen radialen Löchern (7) des röhrenförmigen Zylinders (5) vorhanden sind, radial nach außen zu bewegen, so dass solche Kugeln (2) in Kontakt mit den ineinandergreifenden Zahn- und Kugelverriegelungskanalelementen (1) kommen, die außerhalb des röhrenförmigen Zylinders (5) vorhanden sind.

7. Vorrichtung nach mindestens einem der vorhergehenden Ansprüche, **dadurch gekennzeichnet, dass** die Kugeln (2) in der geschlossenen Konfiguration zwischen dem röhrenförmigen Zylinder (5) und den ineinandergreifenden Zahn- und Verriegelungskanalelementen (1) übergreifend angeordnet sind, so dass die mechanischen Kräfte, die durch etwaige Versuche, den Verschlussdeckel (C) zu öffnen, direkt auf die Kugeln (2) übertragen werden, die in direktem und gleichzeitigem Kontakt mit dem röhrenförmigen Zylinder (5) und den Verriegelungselementen (1) am Boden (F) stehen.

8. Vorrichtung nach mindestens einem der vorhergehenden Ansprüche, **dadurch gekennzeichnet, dass** sie zwei diametral gegenüberliegende Löcher (7) in der Nähe des freien Endes des röhrenförmigen Zylinders (5) aufweist, in dem das Schloss (6) eingesetzt ist, wobei zwei Kugeln (2), die in den Löchern (7) angeordnet sind, und zwei Kugel-Verriegelungselemente (1), die an den gleichen Löchern (7) angeordnet sind, eine Zahn- und Kanaleingriff auszubilden, wobei derartige Kugel-Verriegelungselemente (1) mit dem Boden (F) des kastenartigen Hohlkörpers (S) der Vorrichtung verschweißt oder in sonstiger Weise integral ausgebildet sind; wobei die Kugelverriegelungselemente (1) sowohl die Form eines kreisförmigen Kronenbogens haben, der konzentrisch zum röhrenförmigen Zylinder (5) ist, als auch an jedem Loch (7) der Kugeln (2) in einem Abstand angeordnet sind, der mindestens dem Außendurchmesser des röhrenförmigen Zylinders (5) entspricht, der integral mit der Verschlussabdeckung (C) ist.

9. Vorrichtung nach mindestens einem der vorhergehenden Ansprüche, **dadurch gekennzeichnet, dass** jedes ineinandergreifender Zahn- und Kugelverriegelungskanalelement (1) parallel zur Oberfläche des Bodens (F) angeordnet ist.

10. Vorrichtung nach Anspruch 4, **dadurch gekennzeichnet, dass** jede Kugel (2) in das entsprechende Loch (7) geführt wird und darin gleiten kann, ohne jemals vollständig daraus auszutreten, und zwar sowohl in die eine als auch in die andere Richtung, entsprechend der Drehrichtung des Mitnehmers (8), der durch das Schloss (6) betätigt wird.

11. Vorrichtung nach mindestens einem der vorhergehenden Ansprüche, **dadurch gekennzeichnet, dass** das Schloss (6) so konfiguriert ist, einen flachen Mitnehmer (8) zu drehen, der so positioniert ist, dass er eine oder mehrere Kugeln (2) betätigt, um deren Bewegung bei der Eigendrehung des Mitnehmers (8) zu bewirken.

12. Vorrichtung nach mindestens einem der vorhergehenden Ansprüche, **dadurch gekennzeichnet, dass** der Mitnehmer (8) bei zwei sich unter 180° gegenüberliegenden Kugeln (2) oval ist, bei drei Kugeln (2), die unter 120° zueinanderstehen, der Mitnehmer (8) dreilappig ist; usw.

13. Vorrichtung nach mindestens einem der vorhergehenden Ansprüche, **dadurch gekennzeichnet, dass** der Mitnehmer (8) und die Kugeln (2) durch eine magnetische Anziehungskraft zusammengehalten werden, die die Kugeln (2) durchwegs in ständigem mechanischen Kontakt mit dem Mitnehmer (8) hält, so dass, wenn der Mitnehmer (8) in die entgegengesetzte Richtung zu derjenigen gedreht wird, die erforderlich ist, um die Kugeln (2) wegzubewegen und die einbruchsichere Vorrichtung zu schließen, diese Kugeln (2) von dem Mitnehmer (8) angezogen werden und in ihre Ruhestellung in Richtung des Inneren des Zylinders (5) und in eine solche Position zurückkehren, dass die Verriegelungselemente (1) am Boden (F) der Vorrichtung gelöst werden, die somit durch Anheben ihres Verschlussdeckels (C) geöffnet werden kann.

14. Vorrichtung nach mindestens einem der vorhergehenden Ansprüche, **dadurch gekennzeichnet, dass** der Mitnehmer (8) ein Magnet ist und die Kugeln (2) aus ferromagnetischem Material bestehen, um von diesem angezogen zu werden, oder dass die Kugeln (2) Magnete sind und der Mitnehmer (8) aus ferromagnetischem Material besteht.

15. Vorrichtung nach mindestens einem der vorhergehenden Ansprüche, **dadurch gekennzeichnet, dass** der boxenartige hohle Körper (S) der Vorrichtung, der Verschlussdeckel (C) mit dem röhrenförmigen Zylinder (5) und die ineinandergreifenden Zahn- und Kugelverriegelungskanalelemente (1) am Boden (F) aus einer nicht magnetischen Stahllegierung hergestellt sind.

16. Vorrichtung nach dem vorhergehenden Anspruch, **dadurch gekennzeichnet, dass** der boxenartige hohle Körper (S) der Vorrichtung, der Verschlussdeckel (C) mit dem röhrenförmigen Zylinder (5) und die ineinandergreifenden Zahn- und Kugelverriegelungskanalelemente (1) am Boden (F) eine Oberflächenhärte mit einem HRC-Härtegrad zwischen 55 und 60 aufweisen.

17. Vorrichtung nach mindestens einem der vorhergehenden Ansprüche, **dadurch gekennzeichnet, dass** der röhrenförmige Zylinder (5), der das Schloss (6) umfasst, relativ zu dem Verschlussdeckel (C) dezentral ist, und dass die vom Schloss (6) am weitesten entfernte Seite des Verschlussdeckels (C) mit Rastnasen (9) versehen ist, die geeignet sind, in entsprechende Auslässe (10) einzugreifen, die in der entsprechenden Seite des boxenartigen hohlen Körpers (S) angeordnet sind, um die Positionierung des Verschlussdeckels (C) und die Öffnungs-/Schließbewegungen desselben zu erleichtern.

## Revendications

1. Dispositif formant contenant incrochetable qui est installable et fixable à l'intérieur de véhicules pour la protection du connecteur OBD (diagnostic embarqué), du type comprenant un corps creux (S) semblable à une boîte avec un couvercle (C) de fermeture amovible, **caractérisé en ce que** ledit couvercle (C) est doté d'un barillet (5) tubulaire contenant une serrure (6) pour faire fonctionner un système de fermeture à came (8) et bille (2), configuré pour coopérer avec des éléments (1) d'interverrouillage à dent et canal de verrouillage à bille agencés au fond (F) dudit corps creux (S) ; dans lequel à l'intérieur dudit corps creux (S) il y a également un logement pour un connecteur OBD, ainsi qu'une ouverture (3) pour que les câbles de ce même connecteur passent vers l'extérieur ; dans lequel ladite came (8) est reliée fonctionnellement à chaque bille (2) associée à celle-ci, au moyen de forces d'attraction magnétique, tandis que les parties restantes du dispositif sont constituées d'un matériau diamagnétique.

2. Dispositif selon la revendication précédente, **caractérisé en ce que** ledit corps creux consiste en une boîte (S) avec un couvercle (C) ouvrable, dans lequel le logement pour le connecteur OBD est placé sur la surface intérieure de la face du fond (F) opposée au couvercle (C) ; dans lequel lesdits éléments (1) d'interverrouillage à dent et canal sont configurés pour coopérer avec des billes (2) correspondantes pour verrouiller le couvercle (C) dans la configuration fermée du corps creux de la boîte (S) dans laquelle le connecteur OBD est maintenu.

3. Dispositif selon au moins une des revendications précédentes, **caractérisé en ce que** ledit barillet (5) tubulaire du couvercle (C) est positionné au niveau des éléments (1) d'interverrouillage placés au fond (F) de la boîte (S) et fait saillie vers l'intérieur du corps creux ; dans lequel ledit barillet (5) tubulaire est d'une seule pièce ou fait partie intégrante du couvercle (C) et est accessible à partir de l'extérieur à travers un trou spécial (4) présent sur le couvercle (C) et dans lequel le bloc d'une serrure (6) d'un type connu est insérable, lequel est rotatif de manière coaxiale par rapport au barillet (5) tubulaire qui le reçoit.

4. Dispositif selon au moins une des revendications précédentes, **caractérisé en ce que** ledit barillet (5) tubulaire est d'une longueur telle qu'il atteint presque le fond (F) de la boîte (S), et près de l'extrémité libre dudit barillet (5), et un ou plusieurs trous (7) radiaux sont prévus distribués uniformément le long de la circonférence du barillet lui-même, lesquels trous (7) sont adaptés pour recevoir des billes (2) respectives mobiles radialement le long de ceux-ci, adaptées pour aboutir à un accouplement de fixation avec au moins un élément (1) d'interverrouillage à dent et canal qui est positionné, de manière correspondante auxdits trous (7) pour les billes (2), au fond (F) de la boîte (S).

5. Dispositif selon la revendication précédente, **caractérisé en ce que**, une fois que le couvercle (C) a été fermé, la serrure (6) peut être actionnée pour éloigner partiellement les billes (2) du barillet (5) tubulaire jusqu'à empiéter mécaniquement sur lesdits éléments (1) d'interverrouillage présents au fond (F) du corps creux, retenant ainsi fermement le couvercle (C) sur le corps creux (S) du dispositif.

6. Dispositif selon la revendication 4 ou 5, **caractérisé en ce que** le barillet (5) tubulaire du couvercle (C) est configuré pour être insérable entre les éléments (1) d'interverrouillage à dent et canal de verrouillage à bille, qui ont la forme d'un arc en couronne circulaire positionné au fond (F) du corps creux (S) semblable à une boîte ; dans lequel une came (8) est prévue, installée en dessous et faisant partie intégrante de la serrure (6), laquelle came (8) peut être actionnée en tournant la clé de la serrure (6) pour faire bouger les billes (2) présentes dans les trous (7) radiaux respectifs du barillet (5) tubulaire radialement vers l'extérieur, de sorte que ces billes (2) viennent en contact avec les éléments (1) d'interverrouillage à dent et canal présents à l'extérieur dudit barillet (5).

7. Dispositif selon au moins une des revendications précédentes, **caractérisé en ce que** lesdites billes (2), lorsqu'elles sont dans la position fermée, sont positionnées à cheval entre le barillet (5) tubulaire et les éléments (1) d'interverrouillage à dent et canal, de sorte que les forces mécaniques causées par de quelconques tentatives pour ouvrir le couvercle (C) soient libérées directement sur les billes (2) placées en contact direct et simultané avec le barillet (5) et les éléments (1) d'interverrouillage au fond (F).

8. Dispositif selon au moins une des revendications précédentes, **caractérisé en ce qu'**il comporte deux trous (7) diamétralement opposés près de l'extrémité libre du barillet (5) tubulaire dans lequel la serrure (6) est installée, deux billes (2) reçues dans lesdits trous (7) et deux éléments (1) de verrouillage à bille prévus au niveau de ces mêmes trous (7), adaptés pour former un interverrouillage à dent et canal, dans lequel ces éléments (1) de verrouillage à bille sont soudés ou dans tous les cas font partie intégrante du fond (F) du corps creux (S) semblable à une boîte du dispositif ; dans lequel lesdits éléments (1) de verrouillage à bille ont tous deux la forme d'un arc en couronne circulaire qui est concentrique avec le barillet (5) et agencé au niveau de chaque trou (7) des billes (2), à une distance égale à au moins le diamètre extérieur du barillet (5) tubulaire faisant partie intégrante du couvercle (C).

9. Dispositif selon au moins une des revendications précédentes, **caractérisé en ce que** chaque élément (1) d'interverrouillage à dent et canal est parallèle à la surface du fond (F).

10. Dispositif selon la revendication 4, **caractérisé en ce que** chaque bille (2) est acheminée dans le trou (7) respectif et peut glisser dans celui-ci sans même sortir complètement de celui-ci, à la fois dans un sens et dans l'autre, selon le sens de rotation de la came (8) actionnée par la serrure (6).

11. Dispositif selon au moins une des revendications précédentes, **caractérisé en ce que** la serrure (6) est configurée pour faire tourner une came (8) plate positionnée pour actionner une ou plusieurs billes (2) de manière à causer leur mouvement lors de la rotation de la came (8) elle-même.

12. Dispositif selon au moins une des revendications précédentes, **caractérisé en ce que** dans le cas de deux billes (2) opposées l'une à l'autre à 180°, la came (8) est ovale ; dans le cas de trois billes (2) à 120° les unes des autres, la came (8) est trilobée ; etc.

13. Dispositif selon au moins une des revendications précédentes, **caractérisé en ce que** la came (8) et les billes (2) sont retenues ensemble par une force d'attraction magnétique, ce qui garde toujours les billes (2) en contact mécanique constant avec la came (8), de sorte que lorsque la came (8) tourne dans le sens opposé à celui nécessaire pour éloigner et rapprocher les billes (2) du dispositif incrochetable, ces billes (2) sont attirées par la came (8) et retournent dans leurs positions de repos vers l'intérieur du barillet (5) et dans une position telle qu'elle sépare les éléments (1) d'interverrouillage présents au fond (F) du dispositif, qui peut ainsi être ouvert en soulevant le couvercle (C) de celui-ci.

14. Dispositif selon au moins une des revendications précédentes, **caractérisé en ce que** la came (8) est un aimant et les billes (2) sont constituées d'un matériau ferromagnétique pour être attirées par celui-ci, ou les billes (2) sont des aimants et la came (8) est faite d'un matériau ferromagnétique.

15. Dispositif selon au moins une des revendications précédentes, **caractérisé en ce que** le corps creux (S) semblable à une boîte du dispositif, le couvercle (C) avec le barillet (5) tubulaire et les éléments (1) d'interverrouillage à dent et canal au fond (F) sont constitués d'un alliage d'acier non magnétique.

16. Dispositif selon la revendication précédente, **caractérisé en ce que** le corps creux (S) semblable à une boîte du dispositif, le couvercle (C) avec le barillet (5) tubulaire et les éléments (1) d'interverrouillage à dent et canal au fond (F) ont une dureté de surface avec un degré de dureté HRC entre 55 et 60.

17. Dispositif selon au moins une des revendications précédentes, **caractérisé en ce que** le barillet (5) tubulaire contenant la serrure (6) est décentralisé par rapport au couvercle (C), et **en ce que** le côté le plus éloigné du couvercle (C) par rapport à la serrure (6) est doté de dents d'accrochage (9) adaptées pour coopérer avec des trous (10) respectifs agencés dans le côté correspondant du corps creux (S) semblable à une boîte, afin de faciliter le positionnement du couvercle (C) et les mouvements d'ouverture/de fermeture de celui-ci.
